# EUROPEAN PATENT SPECIFICATION

(11) **EP 2 399 956 B1**
(45) Date of publication and mention of the grant of the patent: **08.05.2013**
(21) Application number: 11166943.8
(22) Date of filing: 20.05.2011
(51) Int. Cl.: C08L 33/02, C08K 5/151

(54) **Curable carbohydrate binder compositions for light color or white thermosets**
Härtbare Kohlenhydrat-Bindungszusammensetzungen für Thermosets mit leichter Farbe oder weiß
Compositions liantes de carbohydrate durcissable pour thermodurcis blancs ou de couleur pâle

(30) Priority: 01.10.2010 US 388698 P; 08.06.2010 US 397247 P
(43) Date of publication of application: 28.12.2011
(73) Proprietor: Rohm and Haas Company, Philadelphia, Pennsylvania 19106-2399 (US)
(72) Inventor: Brady, Jean Marie, Maple Glen, PA 19002 (US)
(74) Representative: Buckley, Guy Julian

(56) References cited:
- EP-A1- 0 649 870
- WO-A1-2007/049952

## Description

The present invention relates to carbohydrate and polymeric polyacid curable compositions useful as uncolored or lightly colored thermosetting binders for a variety of applications. More particularly, the present invention relates to aqueous binder compositions comprising polymeric polyacids and mixtures of monosaccharides with oligosaccharides having a formula weight of 5,000 or less, and the use thereof as curable binders.

Due to their favorable cost/performance ratio, the thermosetting binder resins of choice in the past have been phenol/formaldehyde or urea/formaldehyde resins. Applications for formaldehyde resins are extensive, including coatings, adhesives, laminates, air and oil filters, wood bonding, fiber bonding, and composites. However, curable compositions containing little or no formaldehyde are now highly desirable in a variety of products, due to the health and environmental problems associated with formaldehyde.

Current acrylic polyol thermosetting binders are white in color when cured and offer excellent rigidity. However, new and less expensive bio-based binder materials have recently been introduced to the insulation market. Many of these materials cure to form highly colored thermosets, such as those comprising saccharides and/or simple sugars which are believed brown due to carmelization and/or Maillard reactions.

Recent U.S. patent 7,026,390, to O'Brien-Bernini et al., discloses polyacid containing binders with trihydric polyols, such as glycerol and triethanolamine, and extenders such as starches and gums, all of which are known to be polysaccharides. The O'Brien-Bernini binders do not include the carbohydrate of the present invention and need a polyol to provide desirable physical properties. O'Brien-Bernini does not disclose a low color or uncolored binder comprising binder materials from renewable resources.

The present inventor has endeavored to produce a formaldehyde-free thermosetting binder comprising renewable resources which imparts rigidity suitable for use in glass insulation and/or other fibrous composites and which is not highly colored.

### STATEMENT OF THE INVENTION

According to the present invention, aqueous binder compositions which are free of nitrogen-containing Maillard reactants comprise one or more polymeric polyacid, e.g. a solution (co)polymer, having a weight average molecular weight of 1,000 or higher, or up to 500,000, a carbohydrate component comprising a monosaccharide or disaccharide and one or more oligosaccharide having three or more saccharide groups, preferably, four or more saccharide groups and a molecular weight (formula weight) of up to 5,000, or, preferably, up to 2,000, and from 0.5 to 30 wt.%, preferably, 20 wt.% or less, based on total binder solids, of one or more bleaching agent, wherein the ratio of hydroxyl groups in the carbohydrate component, e.g. on the sugar rings, to carboxylic acid groups in the polymeric polyacid is 10.0:1 1 or less, or 0.2:1 or more, preferably 5.0:1 or less, or, preferably, 0.8:1 or more. The carbohydrate component may comprise 8.0 wt.% or more of oligosaccharides or up to 90 wt.%, or, preferably, 10.0 wt.% or more, or, more preferably, 20.0 wt.% or more.

In one aspect of the composition of the present invention, for lower application viscosity and improved substrate, e.g. fiber, coverage the polymeric polyacid has a weight average molecular weight of 30,000 or less, preferably, 10,000 or less. Suitable polymeric polyacids have a weight average molecular weight of 1,000 or more help to improve development of binder structure and, thus, mechanical properties like tensile strength.

The carbohydrate component of the composition has a dextrose equivalent value (DE) of ≥4, and up to 75, preferably, of 10 or more, or, preferably, 70 or less.

In a further aspect, the carbohydrate component of the composition, i.e. the mixture of mono- and/or di-saccharide with one or more oligosaccharide having three or more saccharide groups, further comprises an additional amount of up to 50 wt.%, preferably up to 20 wt.%, of a mono- or di- saccharide, e.g. dextrose, sucrose or fructose, based on the total weight of the carbohydrate component.

In yet another aspect, the bleaching agent of the composition comprises a phosphorus containing catalyst, such as sodium hypopophosphite (SHP), or a Lewis acid, such as a metal salt of an inorganic acid, e.g. sodium bisulfite, sodium persulfate, or an organic titanate or zirconate.

In still yet another aspect of the composition exhibiting improved hot wet tensile strength , the aqueous composition further comprises triethanolamine.

In yet even still another aspect of the composition, the aqueous composition further comprises an emulsion (co)polymer.

In another aspect of the present invention, methods of using the aqueous binder compositions comprise treating substrates with the compositions, followed by drying and/or heat curing.

In yet another aspect of the present invention, a composite or dried or cured product, such as, for example, a glass mat or articles containing glass mat, or fiberglass insulation, e.g. ceiling tiles, or wood products, comprises the binder compositions and a substrate material made of fibers, slivers, chips, particles, and combinations thereof. The composites may also comprise one layer of a laminate or multi-layer film, e.g. a floor tile.

As used herein, the phrase "aqueous" includes water and mixtures composed substantially of water and water-miscible solvents.

As used herein, the phrase "based on total binder solids" refers to weight amounts of any given ingredient in comparison to the total weight amount of all of the non-volatile ingredients in the binder, including the carbohydrate component, polymeric polyacids, bleaching agents, emulsion copolymer(s), and additives.

As used herein, the phrase "dextrose equivalent value" or DE is defined as DE equals 120/DP, where DP stands for average degree of polymerization or saccharides in the carbohydrate component. Thus, a carbohydrate component having a DE of 30 has an average of four saccharide groups per molecule even though the carbohydrate component contains a distribution of monosaccharides as well as oligo-saccharides of different formula weights. And, by knowing DP, where DP=120/DE, and the sugar unit weight, one can calculate number average molecular weight. For instance, a saccharide with a DE of 30 has a calculated DP of 4 and, thus, has a number average molecular weight = 4x180 = 720, for material based on glucose units having a unit weight taken to be 180 amu. For example, a carbohydrate component having a DE of 25 has an approximate average formula weight equal to 4.8 dextrose units, or about 864.

As used herein, unless otherwise indicated, the phrase "formula weight" means the weight in atomic mass units (amu) of the theoretical molecular formula of a compound. The formula weight for a carbohydrate component, which is a mixture, is not always available. Thus, one may alternatively use dextrose equivalent value to calculate a number average molecular weight or use a reported molecular weight for a commercially available carbohydrate component.

As used herein, the phrase "emulsion polymer" refers to a polymer that when combined with water or aqueous solvent forms a dispersed phase of an aqueous emulsion, including polymers formed by aqueous emulsion polymerization.

As used herein, the unit of tensile strength (stress at failure) is taken to be pounds force/inch sample width, which in SI units corresponds to 4.4482N for a 2.54 cm (1 inch) wide sample.

As used herein, unless otherwise indicated, the phrase "glass transition temperature" or "Tg" refers to a measured Tg, determined by differential scanning calorimetry (DSC) using a heating rate of 10°C / minute, taking the mid-point in the heat flow versus temperature transition as the Tg value.

As used herein, unless otherwise indicated, the phrase "hydroxyl groups in the carbohydrate component" means that number of hydroxyl groups which would be present if there were four (4) hydroxyl groups in each saccharides unit. For example, a corn syrup carbohydrate component that has a DP of 4 and a molecular weight (formula weight) of 847 is assumed to have 16 hydroxyl groups; and so 100 grams of this carbohydrate has 16 *1001847 hydroxyl molar equivalents, or 1.889 moles (molar equivalents) of hydroxyl groups.

As used herein, unless otherwise indicated, the phrase "molecular weight" refers for polymeric polyacids to the weight average molecular weight of a polymer as measured by gel permeation chromatography (GPC). Gel permeation chromatography, otherwise known as size exclusion chromatography, actually separates the members of a distribution of polymer chains according to their hydrodynamic size in solution rather than their molar mass. The system is then calibrated with standards of known molecular weight and composition to correlate elution time with molecular weight. The techniques of GPC are discussed in detail in Modern Size Exclusion Chromatography, W. W. Yau, J. J Kirkland, D. D. Bly; Wiley-lnterscience, 1979, and in A Guide to Materials Characterization and Chemical Analysis, J. P. Sibilia; VCH, 1988, p. 81-84.

As used herein, the term "polymer" includes the term "copolymer", and, unless otherwise indicated, the term "copolymer" refers to polymers made from any two or more different monomers, including, for example, terpolymers, pentapolymers, homopolymers functionalized after polymerization so that two or more different functional groups are present in the product copolymer, block copolymers, segmented copolymers, graft copolymers, and any mixture or combination thereof. (Co)polymer means homopolymer or copolymer.

As used herein, the term "saccharide" refers to polyhydroxylated compounds which contain aldehydic or ketonic groups or yield such groups upon hydrolysis.

As used herein, the phrase "substantially formaldehyde-free" refers to compositions free from added formaldehyde, and which do not liberate substantial formaldehyde as a result of drying and/or curing. Preferably, such binder or material that incorporates the binder liberates less than 100 ppm of formaldehyde, more preferably less than 25 and most preferably less than 5 ppm of formaldehyde, as a result of drying and/or curing the binder.

As used herein, the phrase "substantially free of nitrogen-containing Maillard reactants" refers to compositions that incorporate less than 5,000 ppm of such compounds, more preferably, less than 500 ppm, and, most preferably, less than 200 ppm of such compounds, in the binder based on total binder solids.

As used herein, "wt%" or "wt. percent" means weight percent based on solids.

As used herein, the phrase "emulsion polymer" refers to a polymer that has been prepared by emulsion polymerization.

The singular forms "a," "an," and "the" include plural referents unless the context clearly dictates otherwise. Unless defined otherwise, technical and scientific terms used herein have the same meaning as is commonly understood by one skilled in the art.

Unless otherwise indicated, any term containing parentheses refers, alternatively, to the whole term as if no parentheses were present and the term without that contained in the parentheses, and combinations of each alternative. Thus, the term "(meth)acylate" encompasses, in the alternative, methacrylate, or acrylate, or mixtures thereof.

The endpoints of all ranges directed to the same component or property are inclusive of the endpoint and independently combinable. Thus, for example, a disclosed range of a ratio of OH:COOH of 10:1 or less, or 0.2:1 or more, preferably 5:1 or less, or, preferably, 0.8:1 or more includes any and all or 0.2:1 to 10:1, from 0.8:1 to 10:1, 5:1 to 10:1, 0.2:1 to 5:1, 0.2:1 to 0.8:1 and 0.8:1 to 5:1.

Unless otherwise indicated, conditions of temperature and pressure are room temperature and standard pressure, also referred to as "ambient conditions". The aqueous binder compositions may be dried under conditions other than ambient conditions.

In accordance with the present invention, aqueous polymeric polyacid and carbohydrate containing binder formulations comprised of mono- and/or di-saccharides and oligosaccharides of having the inventive DE of ≥ 4, formula weight and/or number average molecular weight, such as, for example, corn syrups having a DE of , and which contain no nitrogen-containing Maillard reagents give cured thermosets that are lighter in color than formulations comprised of simple sugars (mono- or di- saccharides) with polyacids. In addition, the aqueous binder compositions of the present invention enable lower binder add-on levels to be used, e.g. lower LOI (loss on ignition), while achieving adequate physical properties.

Useful carbohydrate components comprise a mixture of at least one mono- and/or di- saccharide with a tri- or higher oligo- saccharide having up to about 30 saccharide groups, or, up to 20 saccharide groups, or, preferably, up to 12 saccharide groups.

Monosaccharides have five, six or seven carbon atoms, with the five and six carbon saccharides referred to as pentoses and hexoses, repectively. If the monosaccharide contains an aldehyde it is referred to as an aldose; if it contains a ketone, it is referred to as a ketose. When dissolved in water, glucose sugar rings exist in equilibrium in both open ring aldehyde form, and closed ring form; while fructose exists in equilibrium between open ring ketone form, and closed ring form. Examples of aldotetrose sugars include erythrose and threose; and ketotetrose sugars include erythrulose. Aldopentose sugars include ribose, arabinose, xylose, and lyxose; and ketopentose sugars include ribulose, arabulose, xylulose, and lyxulose. Examples of aldohexose sugars include glucose (for example, dextrose or d-glucose), mannose, galactose, allose, altrose, talose, gulose, and idose; and ketohexose sugars include, psicose, sorbose, and tagatose. Ketoheptose sugars include sedoheptulose. Other natural or synthetic stereoisomers or optical isomers of such carbohydrates may also be useful as the carbohydrate component of the aqueous binder composition. The carbohydrate component may be present in powdered or granulated form or as sugar syrups, including corn syrup, and the like, may act as sources of the carbohydrate component of the aqueous binder composition.

The carbohydrate component of the aqueous binder composition optionally may be substituted, for example with hydroxy, halo, alkyl, alkoxy, or other substituent groups.

Useful oligosaccharides may have a formula weight such that the largest oligosaccharide in the carbohydrate component has a formula weight of up to 5,000, or, less than 3,000. Lower molecular weight oligosaccharides are preferred, such as, for example, those with a formula weight of less than 2000, or, preferably, less than 1,000.

Examples of useful carbohydrate components include corn syrup or any saccharide product having 10 wt.% or more of a mono- or di- saccharide and a DE of from 4 to 65. Commercially available carbohydrate components include, for example, each of Corn Syrup 26/42, Corn Syrup 36/43, Corn Syrup 42/43, and Corn Syrup 62/43, from Archer Daniels Midland Company (ADM) (Decatur, Illinois, USA). The first number of each listed corn syrup corresponds to the DE value of the carbohydrate component. These specific corn syrups are generally colorless prior to use. Other examples include unrefined beet sugar or unrefined beet syrup (DE - 30) and blends of mono- and/or di-saccharides with polysaccharides of less than about 30 saccharide units, e.g. oligomers of galactomannan having 7 or fewer, preferably, 5 or fewer galactomannan groups, or hydrolyzed gums, e.g. hydrolyzed xanthan or guar gum.

In one embodiment, where the substrates are dried but uncured or are cured to less than 67% retained wet strength as ratio of dry strength, such as those cured e.g. at 210°C or less for 1-2 min, the aqueous binder composition may comprise up to 50 wt.% of a mono- or di-saccharide added to the carbohydrate component, based on the total weight of the carbohydrate component. In general, products retaining 67 % or more of wet strength as ratio of dry can comprise mono- or di-saccharides added in addition to the carbohydrate component in amounts of up to 12 wt. %, based on the total weight of the carbohydrate component.

Suitable amounts of the carbohydrate component remain within the desired equivalent ratios and may comprise, for example, 20 wt.% or more, and up to 85 wt.%, preferably 65 wt.% or less, based on total binder solids.

The polymeric polyacid is an addition (co)polymer formed from at least one ethylenically unsaturated monomer. Suitable polymeric polyacids may include, for example, solution polymers, such as the homopolymers of unsaturated carboxylic acids such as (meth)acrylic acid, crotonic acid, isocrotonic acid, maleic acid, cinnamic acid, 2-methylmaleic acid, fumaric acid, itaconic acid, 2- methylitaconic acid, α,β-methyleneglutaric acid and the monoesters of unsaturated dicarboxylic acids, such as alkyl maleates and fumarates at C₁-C₁₀ and solution co-polymers copolymerized from about 50 to 99.9 wt.%, based on the total weight of monomers, at least one of the above mentioned unsaturated carboxylic acids, up to 20 wt.% of a hypophosphoric acid or its salt, and at least one vinyl monomer. Preferred acid monomers are (meth)acrylic acid. Suitable vinyl monomers are styrene, substituted or otherwise by alkyl, hydroxyl or sulfonyl groupings, or by a halogen atom, (meth)acrylonitrile, (meth)acrylamide, substituted or otherwise by alkyl groupings at C₁-C₁₀, alkyl (meth)acrylates, such as, for example, methyl (meth)acrylate, ethyl (meth)acrylate, n-butyl (meth)acrylate and ethylhexyl (meth)acrylate, glycidyl (meth)acrylate, (meth)acrylamide or substituted (meth)acrylamides; styrene or substituted styrenes; butadiene; vinyl acetate or other vinyl esters; and acrylonitrile or methacrylonitrile. Such polymers may comprise copolymerized hypophosphite or its salts used in amounts desirable for bleaching agents.

In one embodiment, the polymeric polyacid is a polycarboxy emulsion copolymer made from 10 to 25 wt.%, based on the total weight of copolymerizable monomers used to make the polymer, of an unsaturated (di)carboxylic acid or anhydride. Such an emulsion polymeric polyacid may have a weight average molecular weight as high as 1,200,000, or, preferably, 500,000 or less.

Suitable bleaching agents comprise phosphorus containing catalysts, such as sodium hypopophosphite (SHP), Lewis acids such as a metal salt of an inorganic acid, e.g. sodium (meta) bisulfite or sulfite salts, or organic titanates or zirconates.

Suitable phosphorus containing catalyst may include, for example, hypophosphorous acid and its salts, as is disclosed in U.S. Pat. No. 5, 077,361, alkali metal hypophosphite salts, alkali metal phosphites, alkali metal polyphosphates, alkali metal dihydrogen phosphates, polyphosphoric acids, alkyl phosphinic acids or oligomers or polymers having a weight average molecular weight less than about 1000 bearing phosphorous-containing groups such as, for example, addition polymers of acrylic and/or maleic acids formed in the presence of sodium hypophosphite, addition polymers prepared from ethylenically unsaturated monomers in the presence of phosphorous salt chain transfer agents or terminators, and addition polymers containing acid-functional monomer residues such as, for example, copolymerized phosphoethyl methacrylate, and similar phosphonic acid esters, and their salts.

Lewis acids useful in the present invention may include, but are not limited to, titanates and zirconates such as organic titanates and zirconates sold by DuPont under the Trade name Tyzor, for example, but not limited to, water soluble Tyzors such as Tyzor^{™} LA, Tyzor^{™} 131, Tyzor^{™} 217, and Tyzor^{™} 218; dibutyltindilaurate, other organo-tin salts, inorganic tin salts such as tin(IV)chloride and corresponding sulfates or nitrates; Al₂(SO₄)3.xH₂O, MgCl₂.6H₂O, AlK(SO₄)₂.10H₂O, Al₂Zn(SO₄)₄, and Lewis acids having the formula MXₙ wherein M is a metal, X is a halogen atom or an inorganic radical or anion (including polyatomic radicals or anions, such as sulfate, nitrate, and the like), and n is an integer of from 1 to 5, such as BX₃, AlX₃, FeX₃, GaX₃, SbX₃, SnX₄, AsX₅, ZnX₂, and HgX₂. A combination of Lewis acid catalysts may also be used. Preferably, the Lewis acid is water soluble (having a solubility in water of greater than 1 gram per liter). Preferably, the Lewis acid catalyst is selected from the group consisting of: sulfates, nitrates, halides, citrates, lactates, and gluconates of zinc, aluminum, zirconium, iron, magnesium, tin, titanium and boron; and their mixed metal salts; organo-lin compounds or salts; and titanates or zirconates of alcohols or (poly)carboxylic acids.

The bleaching agents may be present at a level of 0.2 to 30 wt.%, based on total binder solids, preferably, 1 wt.% or higher, or, preferably, up to 15 wt.%. Lewis acids are preferably used in formulations in the amount of 0.5 wt.% or higher and up to 10 wt.%, based on total binder solids, more preferably, up to 5 wt.%. The phosphorus acid catalysts may be added in the process of polymerizing to form the polymeric polyacid so as to control its molecular weight and are, preferably, used in the amount of 5 wt.% or higher or 20 wt.% or less, based on total binder solids.

In one aspect of the composition of the present invention, the hot wet tensile strength of binders and products made therefrom are improved by addition of from 0.1 to about 25.0 wt.%, preferably, 3.0 wt.% or more, or, preferably 20 wt.% or less of triethanolamine. Such compounds are not considered Maillard reactants and so provide little appreciable coloration or darkening on cure.

In another aspect of the composition of the present invention where flexible and/or elastic products are desired, the aqueous binder composition additionally comprises aqueous emulsion (co)polymers. The emulsion copolymer may be used in the binder of this embodiment of the invention may optionally include, as copolymerized units, the polymerization residue of an unsaturated carboxylic acid, anhydride, or salt thereof or hydroxyl-group, such as (meth)acrylic acid and hydroxyethyl (meth)acrylate. For example, the emulsion copolymer may comprise the polymeric polyacid in the binder, it may be a low acid polymer, or it may not comprise any acid monomer. Polymeric polyacid emulsion polymers may comprise from 10 to 25 wt. %, based on the total weight of copolymerizable monomers used to make the polymer, of unsaturated monomers bearing a carboxylic acid group, anhydride group, or salt thereof, such as (meth)acrylic acid. Low acid polymers may comprise from 1 wt.% to 5 wt.%, or up to 3 wt.%, based on the total weight of copolymerizable monomers used to make the polymer, of monomer bearing a carboxylic acid group, anhydride group, or salt thereof.

The same ethylenically unsaturated carboxylic acid monomers and vinyl monomers may be used to form emulsion copolymers as are used to form the polymeric polyacids.

In one embodiment, the emulsion copolymers may comprise one or more copolymerized multi-ethylenically unsaturated monomers such as, for example, allyl methacrylate (ALMA). The multi-elhylenically unsaturated monomer can be effectively employed at levels as low as 0.1%, by weight based on the weight of the copolymer, preferably, up to 10%, or up to 5%.

Emulsion and solution copolymers may be formed by conventional methods of (co)polymerization with thermal or redox initiators or catalysts and chain transfer agents such as hypophosphites, which can double as bleaching agents.

Suitable emulsion copolymers may have weight average molecular weights of from 5,000 to 10,000,000, preferably, 30,000 or higher, or up to 2,000,000.

The emulsion polymer may be present in the composition in an amount of up to 50%, or up to 30%, based on total binder solids, preferably, up 20%.

The binder of the present invention can contain, in addition, conventional additives, such as, for example, emulsifiers; pigments; fillers or extenders, such as clays and talcs; anti-migration aids; curing agents; coalescents; surfactants, particularly nonionic surfactants; spreading agents; mineral oil dust suppressing agents; biocides; plasticizers; organosilanes; anti-foaming agents such as dimethicones and emulsified poly(dimethicones), silicone oils and ethoxylated nonionics; corrosion inhibitors, such as thioureas, oxalates, and chromates; colorants; antistatic agents; lubricants; waxes; anti-oxidants; coupling agents such as, epoxy silanes, vinyl silanes and hydrophobic silanes. Other additives may include polymers not of the present invention; and waterproofing agents such as silicones and emulsion polymers, particularly hydrophobic emulsion polymers containing, as copolymerized units, greater than 30% by weight, based on the weight of the emulsion polymer solids, ethylenically-unsaturated acrylic monomer containing a C5 or greater alkyl group. The additives are preferably free of amines or nitrogen-containing reactants.

Preferably, the binder compositions are formaldehyde-free, having less than 10 ppm of free formaldehyde. To minimize the formaldehyde content of the aqueous composition, it is preferred, when preparing a polymer-containing formaldehyde-free curable composition, to use polymerization adjuncts and additives which are themselves free from formaldehyde, do not generate formaldehyde during the polymerization process, and do not generate or emit formaldehyde during the treatment of heat-resistant nonwovens.

In a preferred embodiment suitable for flexible binders, the aqueous binder composition further comprises approximately 10-20% by weight, based on the total weight of binder solids, of an acrylic or styrene acrylic emulsion polymer.

The binder components can be pre-mixed prior to application of the binder to the substrate. For example, one or more components may be applied to a non-woven substrate, followed by application of the other binder components of this invention either in aqueous or dried form. After application, the binder can be cured by heating the coated non-woven to a sufficient temperature where it cures on the substrate.

The binder may be applied to substrates by any suitable means including, for example, air or airless spraying, padding, saturating, roll coating, curtain coating, beater deposition, coagulation or dip and squeeze application.

The drying and/or curing the curable composition may comprise heat treatment at 100°C or more, and up to 350°C, which may be maintained for from 1 to 30 minutes. Preferably, heat treatment temperatures range 150°C or higher; such preferred heat treatment temperatures may range up to 260°C, or, more preferably, up to 220°C .. Where the substrate contains wood, temperatures of up to 180°C, are preferred.

Drying and curing can be done in two or more distinct steps, if desired. For example, the curable composition can be first heated at temperatures and for times sufficient to at least partially dry, but not fully cure the composition, followed by heating for a second time, at higher temperatures and/or for longer periods of time, to effect curing. Such procedures, referred to as "B-staging," can be used to provide binder-treated nonwovens, for example, in roll form, which can be cured later, with or without forming or molding into a particular configuration, concurrent with the curing process.

Suitable substrates include, for example, heat-sensitive substrates, such as wood, including, solid wood, wood particles, fibers, chips, flour, pulp, and flakes; paper and cardboard; textiles, including cotton, linen, wool, and synthetic textiles from polyester, rayon, or nylon, and superabsorbent fibers; vegetable fibers, such as jute, sisal, flax, cotton and animal fibers; as well as heat resistant finely divided and fibrous substrates, such as metals, polyesters, rayon, polyacrylonitrile (PAN), polylactic acid (PLA), polycaprolactone (PCL), polyolefins and bi-component fiber comprising two or more fiber-forming polymers; other fibers, such as glass and mineral fibers, aramid fibers, ceramic fibers, metal fibers, carbon fibers, polyimide fibers; and woven and non-woven fabrics made therefrom. Heat-resistant substrates, such as non-wovens, may also contain fibers which are not in themselves heat-resistant such as, for example, polyester fibers, rayon fibers, nylon fibers, and superabsorbent fibers, in so far as or in amounts such that they do not materially adversely affect the performance of the substrate.

The binders of this invention may be used to bind non-woven webs and fabrics. "Non-woven web(s)" refers to any article or sheet-like form made from natural and/or synthetic fibers wherein the fibers are mechanically aligned or consolidated by processes that are well known in the art, for example, wet-laid, air-laid (dry laid), spunbond, spunlace, meltblown and needle punch. Included in the definition of non-woven webs suitable for use with this invention are porous films prepared by the action of chemical or mechanical processing (e.g. apertured films). Also included as useful for the purpose of this invention are paper and paper products.

Non-woven fabrics are composed of fibers which can be consolidated in whole or in part by mechanical means such as, for example, by entanglement caused by needle-punching, by an air-laid process, and by a wet-laid process; by chemical means such as, for example, treatment with a polymeric binder; or by a combination of mechanical and chemical means before, during, or after nonwoven fabric formation. Some non-woven fabrics are used at temperatures higher than ambient temperature such as, for example, glass fiber-containing non-woven fabrics which are impregnated with a hot asphaltic composition pursuant to making roofing shingles or roll roofing material. When a non-woven fabric is contacted with a hot asphaltic composition at temperatures of from ca. 220° C. to 270° C, the non-woven fabric can sag, shrink, or otherwise become distorted. Therefore, non-woven fabrics which incorporate a curable composition should substantially retain the properties contributed by the cured aqueous composition such as, for example, tensile strength. In addition, the cured composition should not substantially detract from essential non-woven fabric characteristics, as would be the case, for example, if the cured composition were too rigid or brittle or became sticky under processing conditions.

The binders of the present invention may find use in treating, for example, in glass wool applications such as mats, fiberglass insulation, and acoustic panels, such as ceiling tiles, flooring underlayments, filtration media, and building products (non-wovens). For other applications, such as where rigid binders are unsuitable, for example, in thin fiberglass or polyester, cellulosic, glass mat, and glass veil mats, the mat may be held together with an emulsion (co)polymer that allows the mat to flex substantially after the binder is cured, to allow the mat to be processed and allow the end product containing the mat to flex well in use. Alternatively, the binder may comprise emulsion polymers to enable it to form a flexible cured product.

In one method of use, the present invention provides methods for treating mat substrates comprising forming wet, uncured webs of fibers, and, preferably, transferring them on to a moving wire or screen running through a binder application station where the aqueous binder of the invention is applied to the mat. After applying binder to the web, the wet bindered web is run over one or more vacuum boxes to emove enough binder to achieve the desired binder content in the mat.

In one embodiment of the invention, composites or treated substrates comprise the binder of the present invention, the substrate, and additives, chosen so as to render them at least "substantially free of amines and nitrogen-containing reactants", meaning that level of the reactive nitrogen containing compound or residue in the treated substrate composite is at or below 1,000 ppm or, preferably, at or below 500 ppm.

### EXAMPLES

These examples serve to illustrate the invention. The scope of the invention is not intended to be limited by these examples. Unless otherwise indicated, the preparations and test procedures are carried out at ambient conditions. Ingredients used in the Examples, below, have the following Abbreviations:

### Polymeric polyacids used in the Examples are listed in Table 1A, below.

**Table 1A: Polymeric Acid Components**

| **Polymeric Polyacid** | **Weight average molecular weight (daltons)** | **Bleaching Agent?** |
|---|---|---|
| 1* | 4500 | No |
| 2¹ | 2700 | Yes |
| 3² | 1200 | Yes |

| | | |
|---|---|---|
| *Polymeric Polyacid 1 is available as Tamol^{™} 963, a neutralized polyacrylic acid (pAA) neutralized to pH 8.5 using NH₄OH (The Dow Chemical Co., Advanced Materials, Philadelphia, PA); 1. Polymeric Polyacid 2 is a pAA made w/10 wt,% of sodium hypophosphite (SHP) in polymerization, based on the total weight of reactants used to make the polymer; and, 2. Polymeric Polyacid 3 is a pAA made w/ -20 wt.% SHP in polymerization, based on the total weight of reactants used to make the polymer. | | |

ADM 42/43: A corn syrup from Archer Daniels Midland (ADM) (Decatur, IL) having a DE of 42.5, and comprising 55 wt.% saccharides having more than 3 groups, 12 wt.% of trisaccharides, 14 wt.% of maltose (a dextrose dimer) and 19 wt.% of dextrose.

ADM 97DE: A corn syrup having a DE number of 97, and comprising dextrose with 2.5 wt.% of maltose and 1.5 wt.% of a saccharide having more than 3 groups.

Some carbohydrates used in the Examples are listed in Table 1 B, below.

**Table 1B: Carbohydrate Components**

| **Carbohydrate Component** | **DE** | **DP** | **Mol Weight** |
|---|---|---|---|
| Corn Syrup 97DE (comparative) | 97+ | ~1 | ~180² |
| Corn Syrup 26/42 | 25.5 | ~4 | 847¹ |
| Corn Syrup 36/43 | 35.8 | 2.8 | 603¹ |
| Corn Syrup 42/43 | 42.5 | 2.35 | 508¹ |
| Corn Syrup 62/43 | 63.8 | 1.57 | 339¹ |

| | | | |
|---|---|---|---|
| 1. Number average molecular weight calculated using Mn=(120/DE)x180, based on dextrose as the saccharide equivalent weight. Dextrose Equivalent(DE) reported by ADM (manufacturer) 2. mol, wt. of dextrose. | | | |

Test Methods: In the Examples that follow, the following test methods were used: Tensile Strenth: For each Example, tensile strength imparted by cured binder was determined by coating two sheets of Whatman GF/A glass filter paper with binder at an add on of 25-30 %, curing and measuring tensile strength using an Tensile Tester (Thwing Albert Instrument Company, West Berlin, N.J.). The treated filter paper was dried at 90°C/1.5min, cured at relatively high temperature (210°C) for 1 or 3 min, and then cut into 2.54 X 10.16 cm (1 x 4 inch) test strips. The tensile strengths at failure were measured using the test strips of binder-coated filter paper and, for each example, the average tensile strengths were taken from a total of 14 strips (events), with an initial jaw separation of 5.08 cm (2 inches), and a crosshead separation rate of 2.54cm (1in)/min at 23°C. Load break sensitivity was set to 9.07 kg (20 lb). Wet strength was determined by first submerging strips in water at 85°C for 10min, followed by blotting them and testing. Tensile strengths correspond to stress at failure, and are reported in units of newtons.

% Add On: Determined as the wt.% of binder on cured substrate divided by the bare substrate weight. The weight of the untreated substrate is taken prior to treatment with binder. See the results Tables for curing conditions.

% Retention: Determined as the proportion of dry tensile strength retained in a cured wet sample, or, mathematically, 100% x (wet tensile strength of cured sample)/(dry Tensile strength of cured sample).

Fraction of Binder Lost on Cure: Equal to the amount of binder on cured substrate expressed as a percentage of the amount of binder on the dried substrate. The weight of the untreated substrate is taken prior to treatment with binder and is subtracted from the total weight of the cured substrate to determine the amount of binder on the cured substrate; and the weight of the untreated substrate is subtracted from the weight of the dried substrate to determine the amount of binder on the dried substrate. See results Tables for curing conditions.

Color Density (Y Value): A method of determining darkness or saturation of a color wherein, for each sample strip or sheet tested, an X-RITE 500 Spectrodensitometer (X-Rite, inc. Grandville, MI 500 Series) measures color density (calibrated using a white and black calibration control). A very low value signifies a sample which is white, or close to white, while a high value indicates a dark color. Acceptable color values are less than 0.2, preferably, less than 0.15.

In the Examples, the Formulations listed in Table 2, below, were made by mixing the components in water with a bench top mixer to form formulations having a solids content of ca. 15-20 wt%, based on total binder weight.

**Table 2: Binder Formulations**

| **Example** | **Polymeric Polyacid** g | **Carbohydrate Component** g | **Bleaching Agent** g | **Ratio OH:COOH** |
|---|---|---|---|---|
| **A (control)** | 2 (pAA) | None (triethanol amine) | SHP¹ and, sulfuric acid | -- |
| **B (comp)** | 1 4.3g citric acid | 10.1g ADM 97DE Dextrose syrup | 1.44g SHP | 1.1:1 |
| **C (comp)** | 14.3g citric acid | 11.5g ADM Corn Syrup 42/43 | 1.44g SHP | 1.2:1 |
| **D (comp)** | 11.45 g citric acid | 8.4g sucrose | 1.44 g SHP | 1.1:1 |
| **E (comp)** | 11.45 g citric acid | 6.8g ADM corn syrup 42/43 | 1.44 g SHP | 0.9:1 |
| **1** | 211.45 g | 6.8g ADM corn syrup 42/43 | 1.44 g SHP | 0.9:1 |
| **2** | 211.45 g | 6.8g ADM corn syrup 42/43 | 0 g SHP** | 0.9:1 |
| **3 (comp)** | 11.45 g citric acid | 8.4g ADM Corn Syrup 42/43 | 1.44 g SHP | 1.1:1 |
| **F (comp)** | 11.45g citric acid | 8.4g sucrose | 1.44 g SHP | 1.1:1 |
| **G (comp)** | 11.45g citric acid | 8.4g ADM Corn Syrup 42/43 | 1 44 g SHP | 1.1:1 |
| **4** | 2 11.45g | 8.4g ADM Corn Syrup 42/43 | 144 g SHP | 1.1:1 |
| **H (comp)** | 2*11.45g | 8.4g ADM Corn Syrup 42/43 | 1 .44g SH P | 1.1:1 |
| **I (comp)** | 211.45g | 8.4g ADM Corn Syrup 42/43 | 1.44g SHP w/NaOH (to raise pH) | |
| **5 (comp)** | 2*11.45g | 8.4g ADM Corn Syrup 42/43 | | 1.1:1 |
| **J (comp)** | 1* 11.45g | 8.4g ADM Corn Syrup 42/43 | | 1.1:1 |
| **6** | 3 2.29g; Citric acid 9.16g | 6.8g ADM Corn Syrup 42/43 | 1.44gSHP | |
| **7** | 35.73g; Citric acid 5.7g a | 6.8g ADM Corn Syrup 42/43 | 1.44 g SHP | |
| **K (comp)** | 311.45g | 8.4g sucrose | 1.44g SHP | 1.1:1 |

| | | | | |
|---|---|---|---|---|
| *Neutralized to pH 8.5 with NH4OH; ** No post-added SHP; 1. Sodium hypophosphite. | | | | |

As shown in Table 3, below, the binder compositions comprising no nitrogen compound, a polymeric polyacid, and the carbohydrate component of the present invention with an oligosaccharide fraction and a bleaching agent, in Examples 4 A-D4, all gave Y values under 0.15 when applied to Whatman filter paper sheets and cured for 1 minute at 210°C and at 3 minutes at 210°C. In contrast, comparative Examples H and J comprising ammonia gave Y values over 0.5, even when made with polymeric polyacid and even when a bleaching agent, sodium hypophosphite (SHP) was added. Further, the comparative Example D comprising sucrose and citric acid gave Y values over 0.5, regardless of cure conditions. Still further, comparative Example C comprising ADM Corn Syrup 42/43 and citric acid gave a Y value of 0.20 after 1 minute cure, but was modestly colored (Y of 0.25) after a 3 minute cure, showing that while citric acid contributes some color, it is not the key source of color to the treated substrates. Still further, comparative Example 5 which is otherwise the same as the inventive Examples 4 A-D but comprises an ammonia neutralized pAA polymer failed to provide cured binders having an acceptable color value, even after a 1 minute cure. Yet still further, a lower add on amount and cure for only 1 min at 210°C in Examples 4C and 4D gave excellent color values that are nearly white.

**Table 3: Color, Tensile Strength and Binder Retention Results**

| **Example** | **Cure Temp** °C | **% Add On*** | **Dry Tensile*** (N) | **Hot Wet Tensile*** (N) | **% retention*** | **Y value**** |
|---|---|---|---|---|---|---|
| | **(1 min)** | | | | | |
| **D** (comp) | 210 | 27.9 | 75.2 | 48.5 | 64.9 | 0.52 |
| **4A** | 190 | 27.2 | 73,4 | 39.6 | 53.9 | 0.06 |
| **4B** | 210 | 27.7 | 52.5 | 40.5 | 77.1 | 0.08 |
| **4C** | 190 | 11.5 | 35.6 | 18.2 | 51.3 | 0.05 |
| **4D** | 210 | 11.3 | 32.5 | 24.5 | 75.3 | 0.07 |
| **G** (comp) | 210 | 25.0 | 76.1 | 53.4 | 70.2 | 0.20 |
| **H** (comp) | 210 | 24.8 | 58.7 | 39.6 | 67.4 | 0.52 |
| **I** (comp) | 210 | 31.1 | 6.7 | 0.0 | | 0.45 |
| **5** (comp) | 210 | 26.7 | 53.8 | 48.0 | 89.3 | 0.29 |
| **J** (comp) | 210 | 26.9 | 48.9 | 29.4 | 60.0 | 0.77 |
| | **(3 min)** | | | | | |
| **D**(comp) | 210 | 26.7 | 72.1 | 52.0 | 72.2 | 0.61 |
| **4A** | 190 | 27.6 | 73.4 | 54.3 | 73.9 | 0.10 |
| **4B** | 210 | 27.2 | 60.9 | 56.9 | 93.4 | 0.15 |
| **4C** | 190 | 10.8 | 32.0 | 24.5 | 76.4 | 0.09 |
| **4D** | 210 | 11.4 | 32.9 | 30.2 | 91.9 | 0.13 |
| **G** (comp) | 210 | 24.6 | 65.4 | 54.3 | 83.0 | 0.25 |
| **H (comp)** | 210 | 25.0 | 63.2 | 41.4 | 65.5 | 0.53 |
| **I** (comp) | 210 | 30.0 | 7.1 | 0.0 | | 0.46 |
| **5** (comp) | 210 | 26.6 | 47.2 | 55.6 | 117.9 | 0.36 |
| **J** (comp) | 210 | 26.9 | 47.2 | 59.2 | 125.5 | 0.72 |

| | | | | | | |
|---|---|---|---|---|---|---|
| * All values are the average taken from 14 trials of each test result reported; ** Reported Y values are the average of 3 separate measurements | | | | | | |

**Tables 4: Binder Add on and Fraction Lost on Cure, 1.1:1 OH:COOH**

| **Example** | **% Add on*** | **% Fraction of Binder Lost on Cure*** |
|---|---|---|
| **D** (comp) | 25.7 | 47.6 |
| **K** (comp) | 26.6 | 33.8 |

| | | |
|---|---|---|
| * Average of four sheets tested. Sheets were dried at 90°C/1.5min and cured at 210 °C for 3min. | | |

As shown in Table 4, above, the binders of polymeric polyacids exhibit about 35% less binder loss on cure than binders made with low molecular weight polycarboxylic acids and without the inventive proportion of polymeric polyacids.

**Table 5: Color Density of Various Cured Binders**

| | **Cure Temp 210 °C** | |
|---|---|---|
| | **1 min** | **3 min** |
| **A** (control) | 0.04 | 0.04 |
| **B** (comp) | 0.47 | 0.52 |
| **6** | 0.19 | 0.29 |
| **7** | 0.15 | 0.24 |
| **1** | 0.11 | 0.09 |

As shown in Table 5, above, the control polymeric polyacid and polyol gives very good color results but does not comprise any renewable materials. Comparative example B, which is a dextrose and citric acid binder, gives unacceptable color results. The inventive Example 1, having a low ratio of saccharide OH groups to carboxylic acid groups of 0.9:1 gives very good color values. In addition, the inventive compositions of Example 7 can include some acid that is not a polymeric polyacid and still provide an acceptable color value. As shown in Example 6, too much of the acid that is not a polymeric polyacid leads to a less desirable color. However, without the molymeric polyacid, the bleaching agent, the lack of nitrogen containing reactants and the carbohydrate component with oligosaccharide fractions, acceptable color values are not attained while achieving acceptable strengths.

In the Examples, the Formulations listed in Table 6, below, were made by mixing the components in water with a bench top mixer to form formulations having a solids content of ca. 5 to 15 wt%, based on total binder weight.

**Table 6: Binder Formulations With Triethanolamine (TEA)**

| **Example** | **Polymeric Polyacid¹** g | **Carbohydrate Component²** g | **Bleaching Agent³** g | **TEA** g | **Ratio⁴ OH:COOH** |
|---|---|---|---|---|---|
| **8** | 11.45 | 7.88 | 0.72 | 0.69 | 1.37 |
| **9** | 11.45 | 7.71 | 0.72 | 0.69 | 1.34 |
| **10** | 11.45 | 7.14 | 0.72 | 1.26 | 1.33 |
| **11** | 11.45 | 5.88 | 0.72 | 2.52 | 1.30 |
| **12** | 10.65 | 8.51 | 0.72 | 0.69 | 1.58 |
| **13** | 10.65 | 7.82 | 0.72 | 1.38 | 1.57 |
| **14** | 10.65 | 7.13 | 0.72 | 2.07 | 1.55 |
| **15** | 10.65 | 6.44 | 0.72 | 2.76 | 1.53 |
| **16** | 9.57 | 7.97 | 0.72 | 2.31 | 1.93 |
| **17** | 9.57 | 7.20 | 0.72 | 3.09 | 1.91 |
| **18** | 7.50 | 11.10 | 0.72 | 1.24 | 3.01 |
| **19** | 7.50 | 10.00 | 0.72 | 2.34 | 2.97 |
| **20** | 54.30 | 18.75 | 1.95 | 18.75 | 1.19 |
| **21** | 54.30 | 35.50 | 1.95 | 18.75 | 1.76 |
| **22** | 54.30 | 50.00 | 1.95 | 18. 75 | 2.26 |

| | | | | | |
|---|---|---|---|---|---|
| 1. Polymeric Polyacid 2 (see Table 1A); 2. ADM Corn Syrup 62/43 (see Table 1 B); 3. Sodium Hypophosphite; 4. Ratio of OH groups in the saccharide component to COOH groups in the polymeric polyacid. | | | | | |

All of the binders shown in Table 6, above, contain triethanolamine, a polymeric polyacid, carbohydrate component of the present invention and a bleaching agent; and each binder is free of nitrogen-containing Maillard reactants. The binders were applied to Whatman glass filter paper sheets and cured at 210 °C for 1 minute. As shown in Table 7, below, all of the binder compositions in Examples 8 through 22-3, all gave Y values under 0.15 when cured for 1 minute at 210°C, showing that triethanolamine does not adversely impact cured binder whiteness or light color. Further, the hot wet tensile strength in the Examples improved in proportion to the amount of triethanolamine used in the binder. See Examples 10-11 and compare Examples 8-9, see Examples 14-15 and compare Examples 12-13, and see Example 17 and compare Example 16. In addition, in Examples 20-1 through 20-3, Examples 21-1 through 21-3 and Examples 22-1 through 22-3, increasing the binder add-on increased the hot wet tensile strength of cured binder treated substrates. Thus, the binders of the present invention can improve the hot wet tensile properties of substrates treated therewith.

**Table 7: Color Tensile Strength and Binder Retention Results**

| **Example** | **% Add On*** | **Dry Tensile*** (N) | **Hot Wet Tensile*** (N) | **% retention*** | **Y value**** |
|---|---|---|---|---|---|
| **8** | 14.4 | 59.6 | 30.7 | 51.5 | 0.07 |
| **9** | 16.9 | 61.8 | 38.3 | 61.9 | |
| **10** | 15.3 | 56.0 | 42.3 | 75.4 | 0.10 |
| **11** | 15.8 | 59.6 | 43.1 | 72.4 | 0.13 |
| **12** | 14.9 | 52.0 | 35.1 | 67.5 | 0.07 |
| **13** | 14.7 | 58.7 | 37.4 | 63.6 | 0.07 |
| **14** | 15.8 | 59.6 | 45.4 | 76.1 | 0.08 |
| **15¹** | 14.85 | 53.8 | 41.8 | 77.2 | 0.08^{1A} |
| **16** | 16.1 | 59.6 | 36.9 | 61.9 | 0.14 |
| **17** | 16.0 | 62.7 | 43.6 | 69.5 | 0.13 |
| **18** | 13.5 | 51.2 | 27.1 | 53.0 | 0.12 |
| **19** | 12.8 | 47.1 | 27.1 | 57.5 | 0.13 |
| **20-1** | 10.6 | 50.7 | 34.7 | 68.4 | 0.05 |
| **20-2** | 16.2 | 60.0 | 43.6 | 72.6 | 0.04 |
| **20-3** | 20.4 | 63.2 | 51.2 | 81.0 | 0.04 |
| **21-1** | 9.0 | 44.9 | 24.5 | 54.5 | 0.08 |
| **21-2** | 13.1 | 54.7 | 34.2 | 62.6 | 0.05 |
| **21-3** | 19.2 | 57.8 | 47.6 | 82.3 | 0.07 |
| **22-1** | 12.2 | 43.1 | 29.4 | 68.0 | 0.09 |
| **22-2** | 18.6 | 47.1 | 34.2 | 72.6 | 0.11 |
| **22-3** | 25.3 | 54.3 | 42.3 | 77.9 | 0.11 |

| | | | | | |
|---|---|---|---|---|---|
| * Data are the average of two separate test runs, resulting in a total of 14 strips tested for each average value reported; 1.A. Datum is taken from a single test run (seven test strips are taken from each test run); ** Reported Y values are the average of 3 separate measurements. | | | | | |

## Claims

1. An aqueous binder composition which is free of nitrogen-containing Maillard reactants comprising one or more polymeric polyacid having a weight average molecular weight of 1,000 or higher and up to 500,000, a carbohydrate component comprising a monosaccharide and/or disaccharide and one or more oligosaccharides having three or more saccharide groups, and a formula weight of up to 5,000, wherein the carbohydrate component has a dextrose equivalent value (DE) of 4 or more and up to 75 and from 0.5 to 30 wt.%, based on total binder solids, of one or more bleaching agent, wherein the ratio of OH groups in the carbohydrate component to carboxylic acid groups in the polymeric polyacid is 10.0:1 or less and 0.2:1 or more.

2. The binder composition as claimed in claim 1, wherein the carbohydrate component comprises an oligosaccharide having four or more saccharide groups.

3. The binder composition as claimed in claim 1, wherein the ratio of OH groups in the carbohydrate component to carboxylic acid groups in the polymeric polyacid is 5.0: 1 or less.

4. The binder composition as claimed in claim 1, wherein the polymeric polyacid has a weight average molecular weight of 30,000 or less.

5. The binder composition as claimed in claim 1, wherein the carbohydrate component further comprises up to 50 wt.% of an additional mono- or di-saccharide, based on the total weight of the carbohydrate component.

6. The binder composition as claimed in claim 1, wherein the bleaching agent comprises a phosphorus containing catalyst, a Lewis acid, a metal salt of an inorganic acid, or an organic titanate or zirconate.

7. The binder composition as claimed in claim 1, further comprising triethanolamine.

8. A method of using the aqueous binder composition as claimed in claim 1, comprising treating substrates with the composition, followed by drying and/or heat curing.

9. A composite or dried or cured product comprising the binder compositions as claimed in claim 3 and a substrate material made of fibers, slivers, chips, particles, and combinations thereof.

10. The composite as claimed in claim 9 which is substantially free of nitrogen-containing Maillard reactants.

## Patentansprüche

1. Eine wässrige Bindemittelzusammensetzung, die frei von stickstoffhaltigen Maillard-Reaktanten ist, beinhaltend eine oder mehrere polymere Polysäuren mit einer mittleren Molekülmasse von 1 000 oder höher und bis zu 500 000, eine Kohlenhydratkomponente, beinhaltend ein Monosaccharid und/oder Disaccharid und ein oder mehrere Oligosaccharide mit drei oder mehreren Saccharidgruppen und einem Formelgewicht von bis zu 5 000, wobei die Kohlenhydratkomponente einen Dextrose-Äquivalent-Wert (DE) von 4 oder mehr und bis zu 75 aufweist, und von 0,5 bis 30 Gew.-%, bezogen auf die Gesamtbindemittelfeststoffe, eines oder mehrerer Bleichmittel, wobei das Verhältnis von OH-Gruppen in der Kohlenhydratkomponente zu Carbonsäuregruppen in der polymeren Polysäure 10,0:1 1 oder weniger und 0,2:1 oder mehr beträgt.

2. Bindemittelzusammensetzung gemäß Anspruch 1, wobei die Kohlenhydratkomponente ein Oligosaccharid mit vier oder mehr Saccharidgruppen beinhaltet.

3. Bindemittelzusammensetzung gemäß Anspruch 1, wobei das Verhältnis von OH-Gruppen in der Kohlenhydratkomponente zu Carbonsäuregruppen in der polymeren Polysäure 5,0:1 oder weniger beträgt.

4. Bindemittelzusammensetzung gemäß Anspruch 1, wobei die polymere Polysäure eine mittlere Molekülmasse von 30 000 oder weniger aufweist.

5. Bindemittelzusammensetzung gemäß Anspruch 1, wobei die Kohlenhydratkomponente ferner bis zu 50 Gew.-% eines zusätzlichen Mono- oder Disaccharids, bezogen auf das Gesamtgewicht der Kohlenhydratkomponente, beinhaltet.

6. Bindemittelzusammensetzung gemäß Anspruch 1, wobei das Bleichmittel einen phosphorhaltigen Katalysator, eine Lewis-Säure, ein Metallsalz einer anorganischen Säure oder ein organisches Titanat oder Zirkonat beinhaltet.

7. Bindemittelzusammensetzung gemäß Anspruch 1, die ferner Triethanolamin beinhaltet.

8. Ein Verfahren zur Verwendung der wässrigen Bindemittelzusammensetzung gemäß Anspruch 1, beinhaltend das Behandeln von Substraten mit der Zusammensetzung, gefolgt von Trocknen und/oder Wärmehärten.

9. Ein Verbundstoff oder getrocknetes oder gehärtetes Produkt, beinhaltend die Bindemittelzusammensetzungen gemäß Anspruch 3 und ein Substratmaterial, das aus Fasern, Spänen, Schnitzeln, Teilchen und Kombinationen davon hergestellt ist.

10. Verbundstoff gemäß Anspruch 9, der im Wesentlichen frei von stickstoffhaltigen Maillard-Reaktanten ist.

## Revendications

1. Une composition liante aqueuse qui est dépourvue de réactifs de Maillard contenant de l'azote comprenant un polyacide polymère ou plus ayant une masse moléculaire moyenne en poids de 1 000 ou plus et allant jusqu'à 500 000, un composant hydrate de carbone comprenant un monosaccharide et/ou un disaccharide et un ou plusieurs oligosaccharides ayant trois groupes saccharides ou plus, et un poids formulaire allant jusqu'à 5 000, dans laquelle le composant hydrate de carbone a une valeur équivalente en dextrose (DE) de 4 ou plus et allant jusqu'à 75 et de 0,5 à 30 % en poids, rapporté à la totalité des solides liants, d'un agent de blanchiment ou plus, dans laquelle le rapport des groupes OH dans le composant hydrate de carbone aux groupes acides carboxyliques dans le polyacide polymère est de 10,0/1 ou moins et 0,2/1 ou plus.

2. La composition liante telle que revendiquée dans la revendication 1, dans laquelle le composant hydrate de carbone comprend un oligosaccharide ayant quatre groupes saccharides ou plus.

3. La composition liante telle que revendiquée dans la revendication 1, dans laquelle le rapport des groupes OH dans le composant hydrate de carbone aux groupes acides carboxyliques dans le polyacide polymère est de 5,0/1 ou moins.

4. La composition liante telle que revendiquée dans la revendication 1, dans laquelle le polyacide polymère a une masse moléculaire moyenne en poids de 30 000 ou moins.

5. La composition liante telle que revendiquée dans la revendication 1, dans laquelle le composant hydrate de carbone comprend en outre jusqu'à 50 % en poids d'un mono- ou disaccharide supplémentaire, rapporté au poids total du composant hydrate de carbone.

6. La composition liante telle que revendiquée dans la revendication 1, dans laquelle l'agent de blanchiment comprend un catalyseur contenant du phosphore, un acide de Lewis, un sel de métal d'un acide inorganique, ou un titanate ou un zirconate organique.

7. La composition liante telle que revendiquée dans la revendication 1, comprenant en outre de la triéthanolamine.

8. Un procédé d'utilisation de la composition liante aqueuse telle que revendiquée dans la revendication 1, comprenant le traitement de substrats avec la composition, suivi de séchage et/ou de thermodurcissement.

9. Un composite ou un produit séché ou durci comprenant les compositions liantes telles que revendiquées dans la revendication 3 et un matériau de substrat réalisé en fibres, copeaux, éclats, particules, et combinaisons de ceux-ci.

10. Le composite tel que revendiqué dans la revendication 9 qui est substantiellement dépourvu de réactifs de Maillard contenant de l'azote.
